# EUROPÄISCHE PATENTSCHRIFT

(11) **EP 4 201 788 B1**
(45) Veröffentlichungstag und Bekanntmachung des Hinweises auf die Patenterteilung: **25.02.2026**
(21) Anmeldenummer: 21216817.3
(22) Anmeldetag: 22.12.2021
(51) Int. Cl.: B62D 9/00, B62D 7/15, B62D 5/00

(54) **LENKUNGSEINRICHTUNG, SOWIE FAHRZEUG MIT EINER LENKUNGSEINRICHTUNG**
STEERING DEVICE AND VEHICLE WITH A STEERING DEVICE
DISPOSITIF DE DIRECTION, AINSI QUE VÉHICULE DOTÉ D'UN DISPOSITIF DE DIRECTION

(43) Veröffentlichungstag der Anmeldung: 28.06.2023
(73) Patentinhaber: thyssenkrupp Presta AG, 9492 Eschen (LI); thyssenkrupp AG, 45143 Essen (DE)
(72) Erfinder: Miano, Carlo Mario, 9492 Eschen (LI); Lapis, Leonard, 9466 Sennwald (CH); Polmans, Kristof, 6464 Tarrenz (AT)
(74) Vertreter: thyssenkrupp Intellectual Property GmbH

(56) Entgegenhaltungen:
- DE-A1- 102012 015 988
- DE-A1- 102015 008 587
- DE-A1- 102020 100 719

## Beschreibung

Die vorliegende Erfindung betrifft eine Lenkungseinrichtung gemäß dem Oberbegriff des Anspruch 1, ein Fahrzeug mit einer Lenkungseinrichtung gemäß dem Oberbegriff des Anspruchs 6, sowie ein Verfahren zur Steuerung der Lenkungseirichtung bzw. des Fahrzeuges gemäß dem Oberbegriff des Anspruchs 7.

Aus der JP2008094263A ist beispielsweise eine Lenkungseinrichtung bekannt geworden, die mit linken und rechten Lenkungsaktuatoren zum Lenkung des linken und rechten Hinterrads des Fahrzeugs unabhängig voneinander ausgestattet ist. Die Lenkungseinrichtung umfasst ferner linke und rechte Lenkwinkelerfassungsmitteln zum Erfassen der Lenkwinkel des linken und rechten Hinterrads. Ferner umfasst die Lenkungseinrichtung eine Fahrzeuggeschwindigkeitserfassungseinrichtung zum Erfassen einer Geschwindigkeit des Fahrzeugs. Ferner umfasst die Lenkungseinrichtung ein Abnormalitätserfassungsmittel zum Erfassen von Abnormalität des Aktuators; ein Betriebsmittel zum Berechnen des Lenkwinkels, der durch den anderen Aktuator des linken und rechten Aktuators zu lenken ist, basierend auf einem Lenkwinkel, der einem Stellglied des linken und rechten Lenkwinkels und der Fahrzeuggeschwindigkeit wenn eine Abnormalität eines Aktuators des linken und rechten Aktuators Stellglieds des linken und rechten Stellglieds erfasst wird. Ferner umfasst die dort beschriebene Lenkungseinrichtung ein Steuermittel zum Steuern des anderen Stellglieds, um die Lenkung durchzuführen.

Aus der DE112017005108T5 ist ein Lenkungssteuersystem für ein Fahrzeug mit einem Steer-by-Wire-System bekannt geworden, umfassend ein erstes elektrisch gesteuertes Lenkungsbetätigungsmittel, funktionsfähig, um eine erste Gruppe von einem oder mehreren Rädern zu lenken, und ein zweites elektrisch gesteuertes Lenkungsbetätigungsmittel, funktionsfähig, um eine zweite Gruppe von einem oder mehreren Rädern zu lenken. Das Lenkungssteuersystem umfasst hier ein erstes Steuermittel, funktionsfähig, um das erste Betätigungsmittel zu steuern, ein zweites Steuermittel, funktionsfähig, um das zweite Betätigungsmittel zu steuern, wobei das zweite Steuermittel ein redundantes Steuermittel umfasst, welches zwei oder mehr Steuergeräte umfasst, um die erforderliche Eingabe in ein zweites Betätigungsmittel zu berechnen. Ferner umfasst das Lenkungssteuersystem ein Watchdog-Steuermittel, funktionsfähig, um die Steuerung des ersten Betätigungsmittels durch das erste Steuermittel bei Erfassen eines Fehlerzustands in dem ersten Steuermittel und/oder in dem ersten Betätigungsmittel zu verhindern.

Aus der DE102015220361A1 Lenksystem für ein Kraftfahrzeug, umfassend eine Vorderachslenkung mit einer Lenkhilfevorrichtung, einem Lenkhilfesteuergerät zur Steuerung der Lenkhilfevorrichtung und einer Hinterachslenkung mit zumindest einem Lenkaktuator bekannt geworden, welche sich dadurch auszeichnet, dass das Lenkhilfesteuergerät der Vorderachslenkung zur Ansteuerung des zumindest einen Lenkaktuators der Hinterachslenkung dient.

Aus der DE102018214983A1 ist einerseits ein Fahrwerk für ein insbesondere autonomes Kraftfahrzeug mit zwei Rädern und einer Lenkung bekannt geworden, welches sich dadurch auszeichnet, dass es eine Rückstellvorrichtung aufweist, die eingerichtet ist, um das Fahrwerk in eine Mittellage zu bringen. Ferner ist aus der DE102018214983A1 ein Verfahren zum Betreiben eines insbesondere autonomen Kraftfahrzeugs bekannt geworden, worin in einem Normalbetrieb eine Allradsteuerung des Kraftfahrzeugs erfolgt und in einem Notbetrieb, in dem die Lenkung eines der Fahrwerke ausgefallen ist, eine Steuerung des Kraftfahrzeugs nur mittels der nicht ausgefallenen Lenkung erfolgt.

Aus der DE102012015988A1 ist ein Lenksystem für ein Kraftfahrzeug umfassend eine Vorderachslenkung mit einer Lenkhilfevorrichtung, eine Hinterachslenkung sowie eine Überwachungseinrichtung zur Überwachung der Funktionsfähigkeit der Lenkhilfevorrichtung bekannt geworden, die sich dadurch auszeichnet, dass ferner eine Steuervorrichtung vorgesehen ist, die mit mindestens einem Mittel zur Einstellung des maximalen Lenkwinkels an der Hinterachslenkung in funktionaler Verbindung steht und derart konfiguriert ist, dass der maximale Lenkwinkel an der Hinterachslenkung vergrößert wird, wenn die Überwachungseinrichtung eine eingeschränkte Funktionsfähigkeit der Lenkhilfevorrichtung feststellt. Auch ist aus der DE102012015988A1 ein Verfahren zur Steuerung eines Lenksystems eines Kraftfahrzeuges mit einer Vorderachslenkung umfassend eine Lenkhilfevorrichtung und einer Hinterachslenkung, bei welchem mit Hilfe einer Überwachungseinrichtung die Funktionsfähigkeit der Lenkhilfevorrichtung überwacht wird, welches sich dadurch auszeichnet, dass die Hinterachslenkung mit einem ersten maximalen Lenkwinkel betrieben wird, wenn die Funktionsfähigkeit der Lenkhilfevorrichtung festgestellt wird und die Hinterachslenkung mit einem zweiten maximalen Lenkwinkel betrieben wird, wenn die Funktionsfähigkeit der

Lenkhilfevorrichtung eingeschränkt ist, wobei der zweite maximale Lenkwinkel größer ist als der erste maximale Lenkwinkel. Des Weiteren zeigt Dokument DE10 2015008587A1 die nachfolgenden Merkmal des unabhängigen Anspruchs 1: Lenkungseinrichtung für ein Fahrzeug, umfassend, eine Steer-by-Wire-Einrichtung für die Vorderräder des Fahrzeugs, eine Hinterradlenkungseinrichtung, die einen hinteren Lenkwinkel einnehmen kann, eine Einzelradbremseinrichtung, sowie eine Kontrolleinrichtung, wobei die Lenkungseinrichtung im Falle eines Ausfalls der Steer-by-Wire-Einrichtung dazu eingerichtet ist, ein Delta-Drehmoment für die vorderen Räder zu definieren, um die geforderte Trajektorie zu erreichen.

Wenngleich hier bereits brauchbare Lenkungseinrichtungen für Fahrzeuge beschrieben werden, so besteht dennoch Verbesserungsbedarf. Das Problem bei bestehenden Lenkungseinrichtungen besteht insbesondere darin, die volle Nutzung von Motoren, Bremsen und Allradlenkung zu berücksichtigen, um die Funktionalität des Fahrzeugs in Bezug auf das Kurvenverhalten bei einem Ausfall des Vorderradlenkungsaktuators sicherzustellen. In diesem Fall liegt das Hauptaugenmerk auf der Wiederherstellung der Fahrbarkeit des Fahrzeugs mit einem minimalen Energieaufwand.

Die sich hieraus ergebenden erfinderische Aufgabe liegt somit darin, eine verbesserte Lenkungseinrichtung für ein Fahrzeug vorzuschlagen, insbesondere eine Lenkungseinrichtung vorzuschlagen, die eine optimale Nutzung von Motoren, Bremsen und Allradlenkung berücksichtigt, um die Funktionalität des Fahrzeugs in Bezug auf das Kurvenverhalten bei einem Ausfall des Vorderradlenkungsaktuators sicherzustellen. Das Hauptaugenmerk liegt unter anderem auf der Wiederherstellung der Fahrbarkeit des Fahrzeugs mit einem minimalen Energieaufwand.

Erfindungsgemäß wird diese Aufgabe durch eine Lenkungseinrichtung mit den kennzeichnenden Merkmalen des Anspruchs 1 gelöst. Dadurch, dass die Lenkungseinrichtung im Falle des Ausfalls der Steer-by-Wire Einrichtung dazu eingerichtet ist,
- dass der hintere *δr*-Lenkwinkel maximiert wird, um mit einem maximalen hinteren Straßenradwinkel zu fahren, sowie
- dass ein Delta-Drehmoment für die vorderen Räder definiert wird, um die geforderte Trajektorie zu erreichen,
kann eine vorteilhafte Lenkungseinrichtung bereitgestellt werden, welche die oben skizzierten Probleme löst, zumindest aber abmildert. Insbesondere, dass ein Delta-Drehmoment für die vorderen Räder definiert wird, um die geforderte Trajektorie zu erreichen, führt zu einem hohen vorderen Lenkwinkel. Auch wird hierdurch eine optimale Nutzung von Motoren, Bremsen und Allradlenkung berücksichtigt, um die Funktionalität des Fahrzeugs in Bezug auf das Kurvenverhalten bei einem Ausfall des Vorderradlenkungsaktuators sicherzustellen. Das Hauptaugenmerk liegt unter anderem auf der Wiederherstellung der Fahrbarkeit des Fahrzeugs mit einem minimalen Energieaufwand.

Weitere vorteilhafte Ausgestaltungen der vorgeschlagenen Erfindung ergeben sich insbesondere aus den Merkmalen der Unteransprüche. Die Gegenstände bzw. Merkmale der verschiedenen Ansprüche können grundsätzlich beliebig miteinander kombiniert werden.

In einer vorteilhaften Ausgestaltung der Erfindung kann vorgesehen sein, dass die Steer-by-Wire-Einrichtung für einen hohen Radeinschlag eingerichtet ist.

In einer weiteren vorteilhaften Ausgestaltung der Erfindung kann vorgesehen sein, dass die Hinterradlenkungseinrichtung für einen großen Radeinschlag eingerichtet ist.

In einer weiteren vorteilhaften Ausgestaltung der Erfindung kann vorgesehen sein, dass das Antriebsmoment des Einzelmotors an der Vorderachse steuerbar ist.

In einer weiteren vorteilhaften Ausgestaltung der Erfindung kann vorgesehen sein, dass die Kontrolleinrichtung
- einen Eingang für die Fahrzeuggeschwindigkeit,
- einen Eingang für die Gierrate,
- einen Eingang für die seitliche Beschleunigung,
- einen Eingang für den gemessenen Lenkwinkel,
- einen Eingang für den geschätzten Fahrzeug Schräglaufwinkel,
- einen Eingang für den gemessenen Vorderradwinkel,
- einen Eingang für den gemessenen Vorderradwinkel,
- einen Eingang für den geschätzten Reibwert der Straße Koeffizient, sowie

- einen Ausgang für eine Korrektur des Vorderradwinkels,
- einen Ausgang für eine Korrektur des Straße Straße Radwinkel,
- einen Ausgang für gewünschte Motordrehmomente,
- ein Ausgang für gewünschte Bremsmomente /Drücke,
aufweist.

Eine weitere Aufgabe der vorliegenden Erfindung liegt darin, ein verbessertes Fahrzeug mit einer Lenkungseinrichtung, insbesondere ein Fahrzeug mit einer Lenkungseinrichtung vorzuschlagen, das eine optimale Nutzung von Motoren, Bremsen und Allradlenkung berücksichtigt, um die Funktionalität des Fahrzeugs in Bezug auf das Kurvenverhalten bei einem Ausfall des Vorderradlenkungsaktuators sicherzustellen. Das Hauptaugenmerk liegt unter anderem auf der Wiederherstellung der Fahrbarkeit des Fahrzeugs mit einem minimalen Energieaufwand.

Erfindungsgemäß wird diese Aufgabe durch ein Fahrzeug mit den kennzeichnenden Merkmalen des Anspruchs 6 gelöst.

Eine weitere Aufgabe der vorliegenden Erfindung liegt darin, ein vorteilhaftes Verfahren zur Steuerung einer erfindungsgemäßen Lenkungseirichtung bzw. eines erfindungsgemäßen Fahrzeuges im Falle des Ausfalls der Steer-by-Wire-Einrichtung vorzuschlagen.

Erfindungsgemäß wird diese Aufgabe durch ein Verfahren mit den kennzeichnenden Merkmalen des Anspruchs 7 gelöst.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine schematische Darstellung einer erfindungsgemäßen Lenkungseinrichtung bzw. eines erfindungsgemäßen Fahrzeuges;
- Fig. 2: eine Kontrolleinrichtung bzw. eine Steuereinrichtung für eine erfindungsgemäße Lenkeinrichtung.

Folgende Bezugszeichen werden in den Abbildungen verwendet:
- 1: Steer-by-Wire-Einrichtung für die Vorderräder eines Fahrzeugs
- 2: Hinterradlenkungseinrichtung
- 3: Einzelradbremseinrichtung
- 4: Einzelmotor an der Vorderachse mit freiem Differential
- 5: Kontrolleinrichtung
- 6: Fahrtrichtung
- 7: Vorderrad
- 8: Hinterrad

- *δ*_{f}: Straßenradwinkel vorne
- *δ*₉ = *δ*_{f} - *δ*ᵣ: allgemeiner Straßenradwinkel
- r: Gierrate
- β: Schräglaufwinkel
- a_{y},: seitliche Beschleunigung
- *δ*ᵣ: Straßenradwinkel hinten
- v: Fahrzeuggeschwindigkeit

- E1: Eingang E1 für die Fahrzeuggeschwindigkeit v
- E2: Eingang E2 für die Gierrate r
- E3: Eingang E3 für die seitliche Beschleunigung a_{y}
- E4: Eingang E4 für den gemessenen Lenkwinkel (*δ*_{steering})
- E5: Eingang E5 für den geschätzten Fahrzeug Schräglaufwinkel (β)
- E6: Eingang E6 für den gemessenen Vorderradwinkel (*δ*_{f})
- E7: Eingang E7 für den gemessenen Vorderradwinkel (*δ*ᵣ)
- E8: Eingang E8 für den geschätzter Reibwert der Straße Koeffizient

- A1: Ausgang A1 für eine Korrektur des Vorderradwinkels (*δ*_{f})
- A2: Ausgang A2 für eine Korrektur des Straße Straße Radwinkel (*δ*ᵣ)
- A3: Ausgang A3 für gewünschte Motordrehmomente
- A4: Ausgang A4 für gewünschte Bremsmomente /Drücke

Dabei gelten Merkmale und Details, die im Zusammenhang mit einem Verfahren beschrieben sind selbstverständlich auch im Zusammenhang mit der erfindungsgemäßen Vorrichtung und umgekehrt, sodass bezüglich der Offenbarung zu den einzelnen Erfindungsaspekten stets wechselseitig Bezug genommen wird bzw. werden kann. Außerdem kann ein ggf. beschriebenes erfindungsgemäßes Verfahren mit der erfindungsgemäßen Vorrichtung durchgeführt werden.

Die hierin verwendete Terminologie dient nur zum Zweck des Beschreibens bestimmter Ausführungsformen und soll die Offenbarung nicht beschränken. Wie hierin verwendet, sollen die Singularformen "ein/eine" und "der/die/das" auch die Pluralformen enthalten, sofern der Kontext dies nicht anderweitig klar erkennen lässt. Es wird zudem klar sein, dass die Ausdrücke "weist auf" und/oder "aufweisend", wenn in dieser Beschreibung verwendet, das Vorhandensein der genannten Merkmale, ganzen Zahlen, Schritte, Operationen, Elemente und/oder Bauteile spezifizieren, aber nicht das Vorhandensein oder den Zusatz von einem/einer oder mehreren anderen Merkmalen, ganzen Zahlen, Schritten, Operationen, Elementen, Bauteilen und/oder Gruppen derselben ausschließen. Wie hierin verwendet, enthält der Ausdruck "und/oder" jedes beliebige und alle Kombinationen von einem oder mehreren der assoziierten, aufgelisteten Elemente.

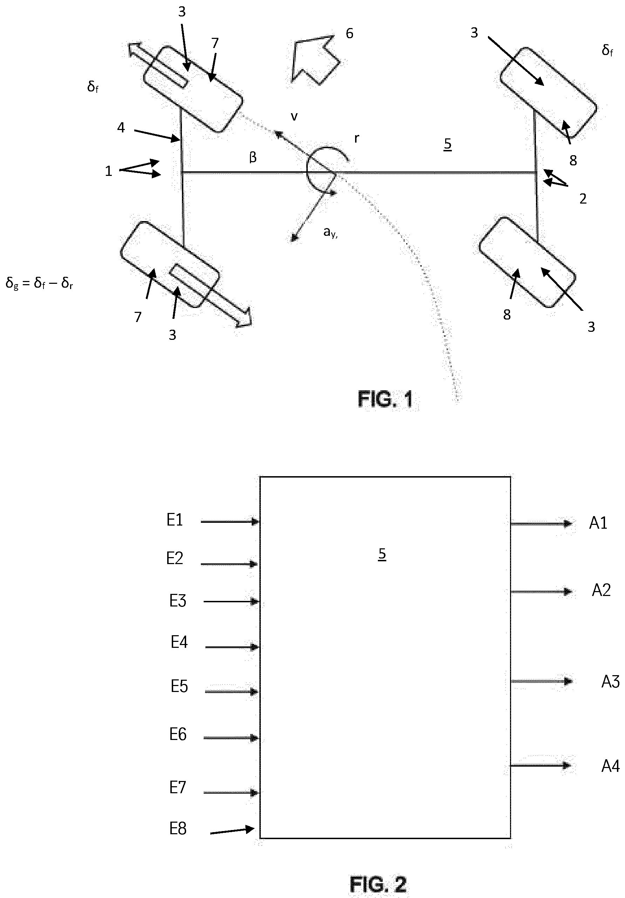

Zunächst wird auf Fig. 1 Bezug genommen.

Eine erfindungsgemäße Lenkungseinrichtung umfasst im Wesentlichen eine Steer-by-Wire-Einrichtung 1 für die Vorderräder eines Fahrzeugs, die insbesondere für einen hohen Radeinschlag eingerichtet ist, eine Hinterradlenkungseinrichtung 2, die insbesondere für einen großen Radeinschlag eingerichtet ist, eine Einzelradbremseinrichtung 3, sowie einen Einzelmotor 4 an der Vorderachse mit freiem Differential. Das Antriebsmoment ist vorzugsweise steuerbar. Ferner umfasst die Lenkungseinrichtung eine Kontrolleinrichtung 5.

Ein erfindungsgemäßes Fahrzeug umfasst eine erfindungsgemäße Lenkungseinrichtung.

In der Figur 1 ist ein erfindungsgemäßes Fahrzeug bzw. eine erfindungsgemäße Lenkungseinrichtung schematisch dargestellt.

In der Figur 1 sind ein Straßenradwinkel vorne durch das Bezugszeichen *δ*_{f}, ein allgemeiner Straßenradwinkel durch das Bezugszeichen bzw. die Formel *δ*_{g} = *δ*ᵣ - *δ*ᵣ, eine Fahrzeuggeschwindigkeit durch das Bezugszeichen v, eine Richtung der Fahrt durch das Bezugszeichen 6, eine Gierrate durch das Bezugszeichen r, einen Schräglaufwinkel durch das Bezugszeichen β, eine seitliche Beschleunigung durch das Bezugszeichen a_{y}, sowie einen Straßenradwinkel hinten durch das Bezugszeichen *δ*ᵣ eingezeichnet. Es sind ferner Vorderräder des Fahrzeugs mit dem Bezugszeichen 7 und Hinterräder des Fahrzeugs mit dem Bezugszeichen 8 gekennzeichnet.

Die Kontrolleinrichtung 5 ist schematisch in der Figur 2 dargestellt.

Die Kontrolleinrichtung umfasst Eingänge und Ausgänge. Zu den Eingängen zählen insbesondere
- ein Eingang E1 für die Fahrzeuggeschwindigkeit v
- ein Eingang E2 für die Gierrate r
- ein Eingang E3 für die seitliche Beschleunigung a_{y}
- ein Eingang E4 für den gemessenen Lenkwinkel (*δ*_{steering})
- ein Eingang E5 für den geschätzten Fahrzeug Schräglaufwinkel (β)
- ein Eingang E6 für den gemessenen Vorderradwinkel (*δ*ᵣ)
- ein Eingang E7 für den gemessenen Vorderradwinkel (*δ*ᵣ)
- ein Eingang E8 für den geschätzter Reibwert der Straße Koeffizient

Zu den Ausgängen zählen insbesondere
- ein Ausgang A1 für eine Korrektur des Vorderradwinkels (*δ*ᵣ)
- ein Ausgang A2 für eine Korrektur des Straße Straße Radwinkel (*δ*ᵣ)
- ein Ausgang A3 für gewünschte Motordrehmomente
- ein Ausgang A4 für gewünschte Bremsmomente /Drücke

Erfindungsgemäß ist vorgesehen, dass die Lenkungseinrichtung dazu eingerichtet ist,
- dass der hintere *δ*ᵣ-Lenkwinkel maximiert wird, um mit einem maximalen hinteren Straßenradwinkel zu fahren, sowie
- dass ein Delta-Drehmoment für die vorderen Räder definiert wird, um die geforderte Trajektorie zu erreichen.

Hierdurch kann eine Lenkungseinrichtung bereitgestellt werden, welche im Falle eines Fehlers, insbesondere, dass der vorderer Steer-by-Wire Aktuator gebrochen und frei beweglich ist, das Fahrzeug in die Lage versetzt, dass mit einem Minimum an Energie gefahren werden kann.

Die Erfindung betrifft ferner ein Verfahren zur Steuerung einer erfindungsgemäßen Lenkungseirichtung bzw. eines erfindungsgemäßen Fahrzeuges im Falle des Ausfalls der Steer-by-Wire-Einrichtung 1, gekennzeichnet, dadurch,
- dass der hintere Lenkwinkel *δr* maximiert wird, um mit einem maximalen hinteren Straßenradwinkel zu fahren, sowie
- dass ein Delta-Drehmoment für die vorderen Räder 7 definiert wird, um die geforderte Trajektorie zu erreichen.

Hierdurch kann ein Verfahren zu Betätigung einer Lenkungseinrichtung im Falle eines Ausfalls der Steer-by-Wire Einrichtung bereitgestellt werden, welche die oben skizzierten Probleme löst, zumindest aber abmildert. Insbesondere, dass ein Delta-Drehmoment für die vorderen Räder definiert wird, um die geforderte Trajektorie zu erreichen, führt zu einem hohen vorderen Lenkwinkel. Auch wird hierdurch eine optimale Nutzung von Motoren, Bremsen und Allradlenkung berücksichtigt, um die Funktionalität des Fahrzeugs in Bezug auf das Kurvenverhalten bei einem Ausfall des Vorderradlenkungsaktuators sicherzustellen. Das Hauptaugenmerk liegt unter anderem auf der Wiederherstellung der Fahrbarkeit des Fahrzeugs mit einem minimalen Energieaufwand.

## Patentansprüche

1. Lenkungseinrichtung für ein Fahrzeug, umfassend, eine Steer-by-Wire-Einrichtung (1) für die Vorderräder (7) des Fahrzeugs, eine Hinterradlenkungseinrichtung (2) die einen hinteren Lenkwinkel (*δ*ᵣ) einnehmen kann, eine Einzelradbremseinrichtung (3), sowie einen Einzelmotor (4) an der Vorderachse mit freiem Differential, sowie eine Kontrolleinrichtung (5), **dadurch gekennzeichnet, dass** die Lenkungseinrichtung im Falle eines Ausfalls der Steer-by-Wire-Einrichtung (1) dazu eingerichtet ist,
- dass der hintere Lenkwinkel (*δ*ᵣ) maximiert wird, um mit einem maximalen hinteren Straßenradwinkel zu fahren, sowie
- dass ein Delta-Drehmoment für die vorderen Räder (7) definiert wird, um die geforderte Trajektorie zu erreichen.

2. Lenkungseinrichtung nach Anspruch 1, **dadurch gekennzeichnet, dass** die Steer-by-Wire-Einrichtung (1) für einen hohen Radeinschlag eingerichtet ist.

3. Lenkungseinrichtung nach mindestens einem der vorhergehenden Ansprüche, **dadurch gekennzeichnet, dass** die Hinterradlenkungseinrichtung (2) für einen großen Radeinschlag eingerichtet ist.

4. Lenkungseinrichtung nach mindestens einem der vorhergehenden Ansprüche, **dadurch gekennzeichnet, dass** das Antriebsmoment des Einzelmotors (4) an der Vorderachse steuerbar ist.

5. Lenkungseinrichtung nach mindestens einem der vorhergehenden Ansprüche, **dadurch gekennzeichnet, dass** die Kontrolleinrichtung (5)
- einen Eingang (E1) für die Fahrzeuggeschwindigkeit (v),
- einen Eingang (E2) für die Gierrate (r),
- einen Eingang (E3) für die seitliche Beschleunigung (a_{y}),
- einen Eingang (E4) für den gemessenen Lenkwinkel (*δ*_{steering}),
- einen Eingang (E5) für den geschätzten Fahrzeug Schräglaufwinkel (β),
- einen Eingang (E6) für den gemessenen Vorderradwinkel (*δ*_{f}),
- einen Eingang (E7) für den gemessenen Vorderradwinkel (*δ*ᵣ),
- einen Eingang (E8) für den geschätzten Reibwert der Straße Koeffizient, sowie
- einen Ausgang (A1) für eine Korrektur des Vorderradwinkels (*δ*ᵣ),
- einen Ausgang (A2) für eine Korrektur des Straße Straße Radwinkel (*δ*ᵣ),
- einen Ausgang (A3) für gewünschte Motordrehmomente,
- ein Ausgang (A4) für gewünschte Bremsmomente /Drücke,
aufweist.

6. Fahrzeug, **gekennzeichnet durch** eine Lenkungseinrichtung, gemäß mindestens einem der vorhergehenden Ansprüche.

7. Verfahren zur Steuerung einer Lenkungseirichtung bzw. eines Fahrzeuges gemäß mindestens einem der vorhergehenden Ansprüche im Falle des Ausfalls der Steer-by-Wire-Einrichtung (1), **gekennzeichnet, dadurch,**
- **dass** der hintere Lenkwinkel (*δ*ᵣ) maximiert wird, um mit einem maximalen hinteren Straßenradwinkel zu fahren, sowie
- **dass** ein Delta-Drehmoment für die vorderen Räder (7) definiert wird, um die geforderte Trajektorie zu erreichen.

## Claims

1. Steering device for a vehicle, comprising a steer-by-wire device (1) for the front wheels (7) of the vehicle, a rear wheel steering device (2) which can assume a rear steering angle (*δr* ), an individual wheel braking device (3), and a single motor (4) on the front axle with a free differential, and a control device (5), **characterised in that,** in the event of a failure of the steer-by-wire device (1), the steering device is designed to
- maximise the rear steering angle (*δr* ) in order to drive with a maximum rear road wheel angle, and
- a delta torque is defined for the front wheels (7) in order to achieve the required trajectory.

2. Steering device according to claim 1, **characterised in that** the steer-by-wire device (1) is designed for a high steering angle.

3. Steering device according to at least one of the preceding claims, **characterised in that** the rear wheel steering device (2) is designed for a large steering angle.

4. Steering device according to at least one of the preceding claims, **characterised in that** the drive torque of the single motor (4) on the front axle is controllable.

5. Steering device according to at least one of the preceding claims, **characterised in that** the control device (5)
- has an input (E1) for the vehicle speed (v),
- an input (E2) for the yaw rate (r),
- an input (E3) for the lateral acceleration (a_{y} ),
- an input (E4) for the measured steering angle (*δ*_{steering}),
- an input (E5) for the estimated vehicle slip angle (β),
- an input (E6) for the measured front wheel angle (*δ*_{f}),
- an input (E7) for the measured front wheel angle (*δ*ᵣ),
- an input (E8) for the estimated road friction coefficient, and
- an output (A1) for a correction of the front wheel angle (*δ*_{f}),
- an output (A2) for a correction of the road wheel angle (*δ*ᵣ),
- an output (A3) for desired engine torques,
- an output (A4) for desired brake torques/pressures.

6. Vehicle **characterised by** a steering device according to at least one of the preceding claims.

7. Method for controlling a steering device or a vehicle according to at least one of the preceding claims in the event of failure of the steer-by-wire device (1), **characterised in that**
- the rear steering angle (*δr* ) is maximised in order to drive with a maximum rear road wheel angle, and
- a delta torque is defined for the front wheels (7) in order to achieve the required trajectory.

## Revendications

1. Dispositif de direction pour un véhicule, comprenant, un dispositif de direction par câble (1) pour les roues avant (7) du véhicule, un dispositif de direction des roues arrière (2) pouvant prendre un angle de braquage arrière (*δ*r ), un dispositif de freinage individuel (3), ainsi qu'un moteur individuel (4) sur l'essieu avant avec différentiel libre, ainsi qu'un dispositif de contrôle (5), **caractérisé en ce que,** en cas de défaillance du dispositif de direction par câble (1), le dispositif de direction est conçu pour
- que l'angle de braquage arrière (*δr* ) soit maximisé afin de rouler avec un angle de roue arrière maximal, et
- qu'un couple delta soit défini pour les roues avant (7) afin d'atteindre la trajectoire requise.

2. Dispositif de direction selon la revendication 1, **caractérisé en ce que** le dispositif de direction à commande électrique (1) est conçu pour un angle de braquage élevé.

3. Dispositif de direction selon au moins l'une des revendications précédentes, **caractérisé en ce que** le dispositif de direction des roues arrière (2) est conçu pour un angle de braquage important.

4. Dispositif de direction selon au moins l'une des revendications précédentes, **caractérisé en ce que** le couple d'entraînement du moteur individuel (4) sur l'essieu avant est réglable.

5. Dispositif de direction selon au moins l'une des revendications précédentes, **caractérisé en ce que** le dispositif de commande (5)
- comporte une entrée (E1) pour la vitesse du véhicule (v),
- une entrée (E2) pour le taux de lacet (r),
- une entrée (E3) pour l'accélération latérale (a_{y} ),
- une entrée (E4) pour l'angle de braquage mesuré (*δ*_{steering} ),
- une entrée (E5) pour l'angle de dérive estimé du véhicule (β),
- une entrée (E6) pour l'angle de roue avant mesuré (*δ*_{f}),
- une entrée (E7) pour l'angle de roue avant mesuré (*δ*ᵣ),
- une entrée (E8) pour le coefficient de frottement estimé de la route, ainsi qu'
- une sortie (A1) pour une correction de l'angle de la roue avant (*δ*_{f}),
- une sortie (A2) pour une correction de l'angle de la roue arrière (*δ*ᵣ),
- une sortie (A3) pour les couples moteur souhaités,
- une sortie (A4) pour les couples/pressions de freinage souhaités.

6. Véhicule **caractérisé par** un dispositif de direction selon au moins l'une des revendications précédentes.

7. Procédé de commande d'un dispositif de direction ou d'un véhicule selon au moins l'une des revendications précédentes en cas de défaillance du dispositif Steer-by-Wire (1), **caractérisé en ce que**
- que l'angle de braquage arrière (*δr* ) est maximisé afin de rouler avec un angle de roue arrière maximal, et
- un couple delta est défini pour les roues avant (7) afin d'atteindre la trajectoire requise.
